# EUROPÄISCHE PATENTSCHRIFT

(11) **EP 1 178 916 B1**
(45) Veröffentlichungstag und Bekanntmachung des Hinweises auf die Patenterteilung: **12.03.2003**
(21) Anmeldenummer: 00945530.4
(22) Anmeldetag: 17.05.2000
(51) Int. Cl.: B62D 25/12, B60R 21/34

(54) **FRONTHAUBENANORDNUNG**
FRONT HOOD ASSEMBLY
ENSEMBLE CAPOT AVANT

(30) Priorität: 17.05.1999 DE 19922455
(43) Veröffentlichungstag der Anmeldung: 13.02.2002
(73) Patentinhaber: Edscha AG, 42855 Remscheid (DE)
(72) Erfinder: POLZ, Andreas, D-45881 Gelsenkirchen (DE); SCHLEGEL, Peter, D-42327 Wuppertal (DE); SCHNEPPENHEIM, Jörg, D-51375 Leverkusen (DE)
(74) Vertreter: Sparing, Rolf Klaus
(86) Internationale Anmeldenummer: DE0001602
(87) Internationale Veröffentlichungsnummer: WO00069708

(56) Entgegenhaltungen:
- DE-A- 2 711 339
- DE-A- 19 706 878
- PATENT ABSTRACTS OF JAPAN vol. 016, no. 557 (M-1340), 27. November 1992 (1992-11-27) & JP 04 212677 A (NISSAN MOTOR CO LTD), 4. August 1992 (1992-08-04)
- PATENT ABSTRACTS OF JAPAN vol. 008, no. 120 (M-300), 6. Juni 1984 (1984-06-06) & JP 59 026370 A (NISSAN JIDOSHA KK), 10. Februar 1984 (1984-02-10)

## Beschreibung

Die Erfindung betrifft eine Fronthaubenanordnung nach dem Oberbegriff des Anspruchs 1. Eine derartige Anordnung ist aus der DE-A-2 711 339 bekannt.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der Aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen. Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschiosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Schamierträgers zuläßt, weshalb der beschriebene Scharnierträger beispielsweise blockiert.

JP-A-59 026 370 zeigt eine Fronthaubenanordnung, die eine Fonthaube umfaßt, wobei die gelenkige Verbindung mit der Karosserie über einen an der Karosserie um einen Zapfen schwenkbaren, gekröpften Lenker erfolgt. Im vorderen Bereich der Fronthaube ist diese über eine Langloch-Führung mit der Karosserie derart verbunden, daß bei Auftreffen eines Fußgängers die Fronthaube nach hinten und zugleich nach oben verlagert wird. Außerhalb eines Aufpralls schwenkt das Scharnier vergleichbar anderen aus dem Stand der Technik bekannten "Gänsehals"-Eingelenkscharnieren um die Anlenkung. Um die Verlagerung der Fronthaube nach oben zu ermöglichen, ist gemäß einem ersten Ausführungsbeispiel der Lenker an einem Anschlagteil über einen Bolzen gelenkig gehalten, wobei der Bolzen eine Blattfeder aufweist, die durch den Fußgängeraufprall außer Eingriff mit einer Ausnehmung gelangt und - nachdem die Fronthaube angehoben wurde - der Last des Fußgängers entgegenwirkt. Soll die Federkraft auch zum Abbremsen beim Absenken der Fronthaube genutzt werden, müssen der Lenker im Bereich der Anlenkung einerseits und die Blattfeder andererseits drehfest miteinander gekoppelt sein. Das zweite Ausführungsbeispiel sieht zu diesem Zweck vor, daß der Lenker im Bereich seiner Anlenkung an dem haubenseitigen Anschlagteil mit einem Zapfen in einem Langloch verschiebbar ist, wobei ein weiterer, koaxial zum Langloch vorgesehener zweiter Zapfen des Lenkers in einer offenen Ausnehmung des Anschlagteils aufgenommen ist. Der Zapfen ist über eine an einem normal zum Langloch angeordneten Anschlag des Anschlagteils abgestützten Feder in Richtung auf die dem ungestörten Betrieb zugeordnete Endlage des Langlochs vorgespannt. Wird durch einen Fußgängeraufprall die Fronthaube nach hinten verschoben, gleitet der zweite Zapfen aus der Ausnehmung und das Anschlagteil und der erste Zapfen sind relativ zueinander verschwenkbar, so daß der Lenker im Anschlagteil schwenkbar ist. Es verbleibt aber dann keine Federkraft gegen das Absenken der Fronthaube. Das dritte Ausführungsbeispiel sieht zu diesem Zweck vor, daß der Lenker im Bereich seiner Anlenkung an dem haubenseitigen Anschlagteil über einen Zapfen verbunden ist. Der Zapfen weist einen Umfang mit wenigstens einer vorstehenden Nocke auf, welche Nocke mit einer Ausnehmung einer Feder im Eingriff steht, wobei bei einem Fußgängeraufprall die Nocke gegen die Vorspannung der Feder außer Eingriff mit der Ausnehmung gelangt. Soll die Federkraft auch zum Abbremsen beim Absenken der Fronthaube genutzt werden, müssen der Lenker im Bereich der Anlenkung einerseits und der Nocken andererseits drehfest miteinander gekoppelt sein. In allen drei Fällen muß die Fronthaube zunächst durch die Aufprallenergie angehoben und zu diesem Zweck nach hinten verlagert werden.

DE-A-197 06 878 beschreibt eine Motorhaube, die in der Art eines Schutzschildes bei einem Frontalaufprall im wesentlichen den Bereich der Windschutzscheibe abdecken soll, um Fahrzeuginsassen vor in die Fahrgastzelle eindringenden Gegenständen zu schützen. Hierzu wird die Fronthaube mittels eines mit einer Sollbruchstelle ausgebildeten Bolzens im Haubenschloß gehalten, mittels einer U-bügelförmigen Schamieranordnung an der Karosserie gelagert und mittels einer Spannanordnung in Richtung auf ein Aufrichten der Fronthaube im Falle eines Frontalaufpralls vorgespannt. Hierzu ist zu bemerken, daß die vorgeschlagene Lösung in keiner Weise geeignet ist, einem Fußgängeraufprall zu begegnen, da der Aufprall zumindest die Kraft zum Abscheren des Bolzens im Haubenschloß aufbringen müßte, ein derart schwach ausgebildeter Bolzen allerdings für den täglichen Einsatz nicht brauchbar wäre. Überdies erfolgt das Anheben der Fronthaube zu langsam und aufgrund der Verlagerung des frontseitigen Endes wird der Motorraum mit seinem für Fußgänger gefährlichen Bestandteilen gerade freigegeben, während die durch eine Verbundglaswindschutzscheibe ausreichend geschützten Insassen des Fahrzeugs zusätzlich gesichert werden. Diesem Dokument sind keinerlei Anregungen für verbesserte Anordnungen zum Dämpfen des Aufpralls eines Fußgängers zu entnehmen.

Insgesamt ist noch keine Lösung vorgeschlagen worden, die eine kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 vorzuschlagen, die eine kostenmäßig und technisch realisierbaren Fußgängerschutz liefert.

Diese Aufgabe wird bei der eingangs genannten Fronthaubenanordnung erfindungsgemäß mit den kennzeichnenden Merkmalen des Anspruchs 1 gelöst.

Die Erfindung sieht ein nachgiebiges Scharnier vor, daß zur Vorbeugung eines Aufpralls eines Fußgängers auf die Fronthaube zur Umsetzung der Aufprallenergie in Bewegungsenergie verlagert wird, wobei das Scharnier, an dem die Fronthaube angelenkt ist, über Spannmittel verfügt, die eine Vorspannung im wesentlichen entgegengesetzt der vermuteten Aufprallrichtung oder zumindest deren vertikaler Komponente vorsieht, wobei durch die Aufprallenergie die Spannmittel komprimiert oder entgegen eines Widerstands verlagert werden, so daß die hierzu erforderliche Arbeit die Aufprallenergie verringert. Zu diesem Zweck ist zweckmäßig der an dem Gelenk angelenkte Lenker, der die Fronthaube mit dem Rahmen des Fahrzeugs verbindet, axial in Fahrtrichtung in einem horizontalen Lager verschieblich angeordnet, um sicherzustellen, daß die durch einen Aufprall verursachte und mit der Komprimierung der Spannmittel einhergehende Verlagerung der Fronthaube in einem im wesentlichen konstanten Radius um die von dem Haubenschloß definierte Schwenkachse erfolgt. Zweckmäßigerweise ist der Lenker in dem Schiebelager auf seine hohe Ruhelage hin vorgespannt, so daß ohne Beanspruchung durch einen Fußgängeraufprall die Fronthaube um das Gelenk nach Freigabe des Haubenschlosses frei verschwenkt werden kann, um Zugang zum Motorraum zu erhalten.Aufgrung der verschieblichen Anordnung des Lenkers in einem horizontalen Lager funktioniert das Scharnier auch dann, wenn die Fronthaube infolge des Aufpralls nach hinten verschoben wird.

Vorzugsweise handelt es sich bei den Spannmitteln um in der Art von Druckfederanordnungen ausgbildeteten Konstruktionen, welche in geeigneter Weise während des Aufpralls ihren gespannten Energiezustand zumindest vorübergehend speichern, um ein Rückschleudern des Fußgängers zu verhindern; dies kann auch durch eine Arretierung des Lenkers erfolgen. Hierdurch ist es vorteilhaft möglich, die Spannmittel nach der Freigabe ohne daß hierfür umfangreiche Umbauten erforderlich sind erneut in einsatzbereiten Zustand zu versetzen. Dies ist besonders vorteilhaft, wenn aufgrund beispielsweise einer Fehlauslösung eine ansonsten unversehrte Fronthaube wieder in betriebsbereiten Zustand versetzt werden soll.

Vorteilhafterweise erlauben die Spannmittel ein stufenloses oder nahezu stufenloses Spannen und damit die Umwandlung von unterschiedlich hohen Energiebeträgen in Reaktion auf unterschiedliche Massen- und Aufprallgeschwindigkeiten von Fußgängern. Hierbei ist insbesondere vorteilhaft, wenn die Absenkung der Fronthaube, die mit dem Spannen der Spannmittel einhergeht, durch das Überschreiten einer Mindestlast zunächst eine große Absenkung bei mittlerer Belastung ermöglicht, die bei stärkerer Belastung nur noch eine um denselben Betrag darüberliegende maximale Absenkung nach sich zieht. Hierdurch kann insbesondere der Verletzung von Kindern im vorderen Bereich der Fronthaube wirksam begegnet werden. Der zu überwindende Schwellenwert liegt oberhalb der Kraft aufgrund eigener Masse der Fronthaube, die beispielsweise 40 Kg beträgt, wobei sich die Gewichtskraft auf zwei Scharniere verteilt.

Gemäß einer ersten bevorzugten Weiterbildung der Spannmittel handelt es sich hierbei um eine mechanische Druckfeder, die in einer vertikalen Ausnehmung des Rahmens fixiert ist und die eine lineare oder progressive Federkennkurve aufweist, wobei anstelle der mechanischen Feder auch ein Einwegspannelement wie ein komprimierbarer Schaum oder dergleichen vorgesehen sein kann. Ebenso ist es möglich, über die vertikale Verlagerungsbewegung des Gelenks eine plastische Formänderung an einem Widerstand vorzusehen.

Gemäß einer weiteren bevorzugten Weiterbildung der Spannmittel umfassen diese eine an dem Gelenk angelenkten und im wesentlichen vertikal nach unten abstehende Stange auf, welche in ihrem Umfang mit Ausbuchtungen und Einschnürungen ausgebildet ist, und somit in den Intervalen der Ausbuchtungen Rastlagen definiert. Diese Stange kann auch als Rastschiene bezeichnet werden. Von wenigstens zwei Seiten und vorzugsweise radial umfassend ist in einem horizontalen Lager ein die Rastschiene umgreifendes Federsystem vorgesehen, bei dem das eine Ende der Federn in dem Widerlager abgestützt ist und das andere Ende der Feder mit einem die Reibung erleichtemden Kugelglied ausgebildet ist, welches in Anlage mit der Rastschiene gelangt. Die Vorspannung der Federn erfordert eine gewisse Mindestkraft, um durch Druckbelastung der Rastschiene das Rückstellen der Federn zu bewirken. Diese Kraft kann einmal durch geeignet Wahl der Federkennlinien eingestellt werden, zum anderen aber auch durch ein Zustellen der Widerlager, wenn diese einstellbar sind, oder schließlich auch durch die Bemessung der radialen Ausbuchtungen der Rastschiene. So ist es beispielsweise möglich, die ersten zwei Raststellungen für eine relativ geringe Energieumwandlung in Spannenergie der Federn vorzusehen, während die nächsten zwei Raststellungen eine mittlere Energie erfordern und die letzten zwei Raststellungen eine hohe Energie. Hierdurch ist sichergestellt, daß bei Aufprall eines Kindes in einem ungünstigen Hebel zu den Spannmitteln dennoch eine Rückstellung bzw. Verlagerung der Fronthaube nach unten um einen bedeutenden Anteil der Maximalverlagerung sich einstellt, beispielsweise um ein Drittel, bei hohen Geschwindigkeiten vielleicht um zwei Drittel. Bei versehentlichem Belasten der Rastschiene, das zu einem Spannen des Spannmittels führt, ist es mit derselben Kraft möglich, die Schiene wieder aus der Feder herauszuziehen, jedoch tritt kein Rückfedern auf, das gegebenenfalls das Rückpralfen eines Fußgängers von der Fronthaube zur Folge hätte. Der insgesamt einstellbare Spannweg beträgt beispielsweise 100 mm und vorzugsweise nicht weniger als 70 mm im Bereich der Spannmittel, wobei durch eine geeignete Anhebung der Fronthaube im Bereich des Haubenschlosses eine gleichmäßigere Anhebung der Fronthaube zum Schutz vor Aufprall eines Fußgängers gewährleistet werden kann.

Es ist zu berücksichtigen, daß aus optischen Gründen und aus Gründen der Geräuschentwicklung das Entstehen einer Fuge der abgehobenen Fronthaube in der Regel unerwünscht ist, weshalb die Kotflügel entsprechend in Anlage an die angehobene Fronthaube gebracht werden sollten, ohne jedoch den Verlagerungsweg der Fronthaube zu verstellen.

Zweckmäßigerweise wird die erfindungsgemäße Fronthaubenanordnung bei einer solchen Fronthaube eingesetzt werden, bei der das Haubenschloß in Fahrrichtung vorne und die Scharniere in Fahrtrichtung hinten vorgesehen sind, es ist aber auch möglich, diese Anordnung genau umgekehrt vorzusehen.

Gemäß einem besonders bevorzugten Merkmal der Erfindung ist das Scharnier im fahrbereiten Zustand nachgiebig ausgebildet, so daß ein Fußgängeraufprall jederzeit abgemildert werden kann. Hierdurch ist es nicht erforderlich, eine aufwendige und schwer beherrschbare Aufprallsensorik und Antriebsmittel für eine Treibladung vorzuhalten, die z.B. bei wegrollenden Fahrzeugen in der Regel nicht funktionieren. Ferner ist auch nach einem Aufprall das Fahrzeug weiter fahrbereit und entspricht einem im Straßenverkehr zugelassenen Zustand.

Weitere Merkmale und Vorteile der Erfindung ergeben sich aus der nachfolgenden Beschreibung sowie aus den abhängigen Ansprüchen.

Die Erfindung wird im folgenden anhand von zwei Ausführungsbeispielen unter Bezugnahme auf die beiliegenden Zeichnungen näher erläutert.
- Fig. 1: zeigt schematisch die Frontpartie eines Kraftfahrzeugs mit einem ersten Ausführungsbeispiel einer erfindungsgemäßen Fronthaubenanordnung.
- Fig. 2: zeigt in Seitenansicht das Scharnier der Fronthaubenanordnung aus Fig. 1.
- Fig. 3: zeigt schematisch die Frontpartie eines Kraftfahrzeugs mit einem zweiten Ausführungsbeispiel einer erfindungsgemäßen Fronthaubenanordnung.
- Fig. 4: zeigt in Seitenansicht das Scharnier der Fronthaubenanordnung aus Fig. 3.
- Fig. 5: zeigt schematisch die Frontpartie eines Kraftfahrzeuges mit einem dritten Ausführungsbeispiel einer erfindungsgemäßen Fronthaubenanordnung.
- Fig. 6: zeigt in Seitenansicht das Scharnier der Fronthaubenanordnung aus Fig. 5.

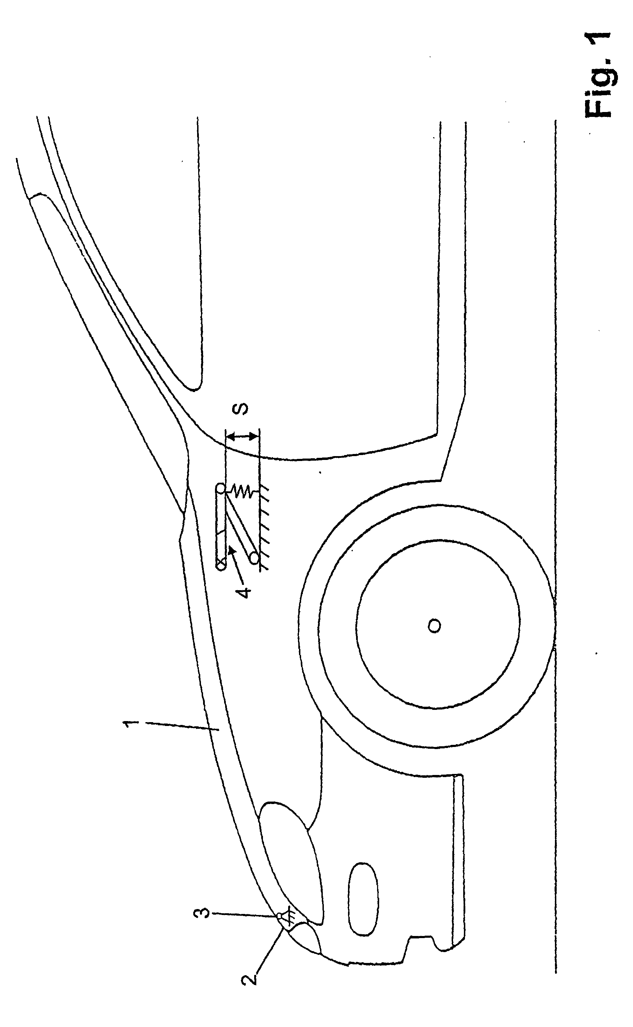

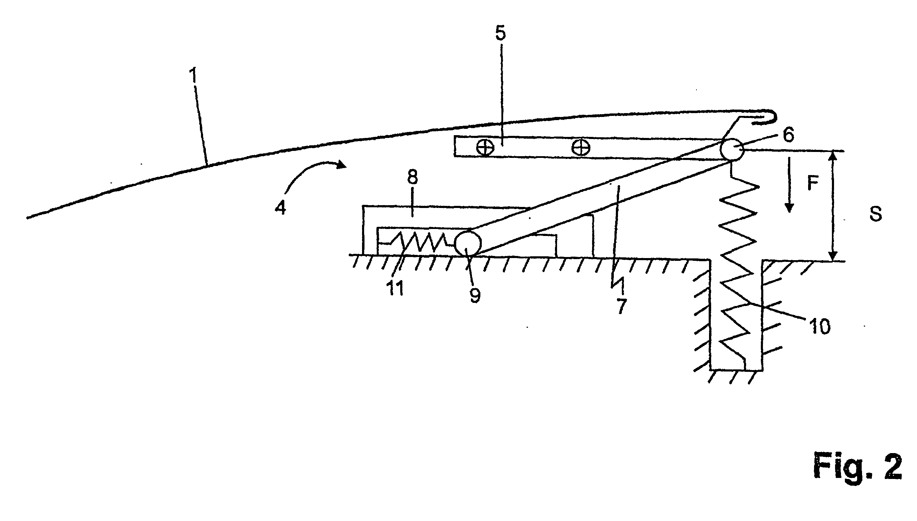

Fig. 1 und 2 zeigen in Seitenansicht die Frontpartie eines Kraftfahrzeugs, dessen Motorraum durch eine Fronthaube 1 verschließbar ist. Die Fronthaube 1 wird mittels eines im Vorderbereich 2 der Fronthaube angeordneten Haubenschlosses 3 ver- bzw. entriegelt und ist an seinem der Fahrerkabine zugewandten Seite jeweils randseitig mittels eines von zwei Scharnieren 4 an dem Rahmen angelenkt. Ein Gelenk 6, das endseitig an einem mit der Fronthaube 1 verbundenen Teil 5 des Scharniers 4 angeordnet ist, definiert die Schwenkachse der Fronthaube 1, wenn diese nach Entriegeln des Haubenschlosses 3 geöffnet wird. Es ist möglich, eine Gasfeder zur Unterstützung der Öffnungsbewegung vorzusehen.

An dem Gelenk 6 ist ein Gelenkkopf 7 angelenkt, dessen dem Gelenk 6 abgewandtes Ende 9 in einer axialen, in Fahrtrichtung verlaufenden Führung 8 aufgenommen ist, in welcher eine Feder 11 den Lenker 7 in Ruhelage vorspannt. Die Ruhelage des Gelenks 6 wird ferner durch ein Federelement 10 bestimmt, das die Lage des Gelenks 4 und somit der Fronthaube 1 in einer Ruhelage vorspannt, wobei eine Wegbegrenzung für das Federelement 10 vorgesehen ist, die verhindert, daß eine Verlagerung über diese Lage hinaus erfolgt. Bei Aufprall eines Fußgängers wirkt eine mit Pfeil F dargestellte Kraft im wesentlichen in vertikaler Komponente auf die Fronthaube 1, welche deutlich höher ist als die Gewichtskraft der Fronthaube 1, die sonst bei Öffnen der Fronthaube 1 in dem Gelenk 6 getragen werden muß. Tritt ein solcher Fall ein, handelt es sich mit großer Wahrscheinlichkeit um den Aufprall eines Fußgängers, dessen Aufprall durch die federnde Lagerung des Scharniers 4 gemindert werden soll. In jedem Fall wird die Fronthaube 1 um das Haubenschloß 3 herum verschwenkt, wodurch der Lenker 7 in seinem axialen Lager 8 verschoben und die Feder 10 gespannt wird. Mit S ist der maximale Weg bezeichnet, den die Feder 10 gespannt werden kann und um den sich die Fronthaube 1 im Bereich ihrer Scharniere 4 absenkt. Die für das Spannen der Feder 10 erforderliche Energie mindert die Aufprallenergie des Fußgängers auf die Fronthaube 1 entsprechend ab und mildert somit seine Verletzungen.

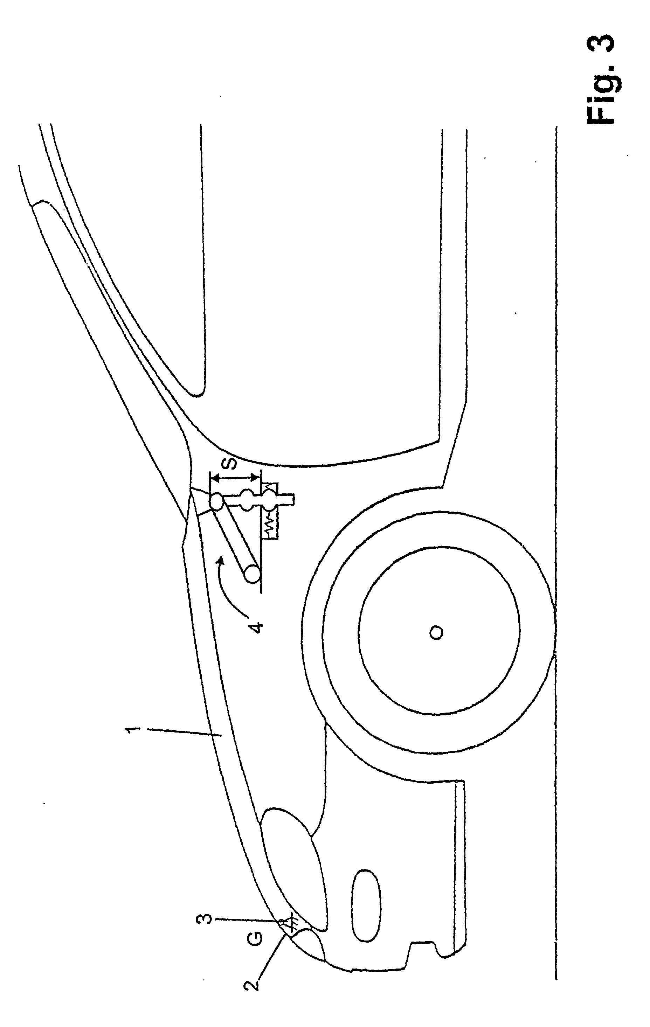

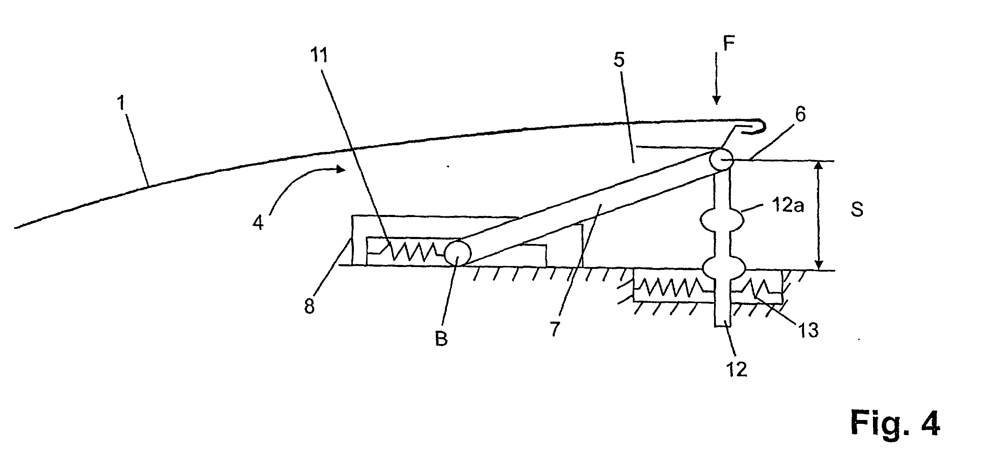

Das Ausführungsbeispiel gemäß Fig. 3 und 4 unterscheidet sich im wesentlichen durch die Art der Spannmittel und ist von seiner Funktionsweise im übrigen vergleichbar dem vorherigen Ausführungsbeispiel, weshalb dieselben Bezugszeichen wie in dem vorherigen Ausführungsbeispiel im wesentlichen die gleichen Teile bezeichnen.

Anstelle einer Feder 10 ist an dem Gelenk 6 eine Rastschiene 12 angeordnet, für deren Verlagerung nach unten Energie aufgewendet werden muß, um die die Rastschiene radial umgebende Federelemente 13, die im wesentlichen horizontal angeordnet sind, zu komprimieren, wenn eine Ausnehmung 12a in der Art eines Nocken zur Verlagerung an den Federelementen 13 vorbei veranlaßt wird. Durch die Kombination der Rastschiene 12 mit senkrecht hierzu wirkenden Federn 13 ist es möglich, die erforderliche Kraft bzw. Energie nichtlinear zu verteilen, indem beispielsweise die Durchmesser der vorstehenden Nocken 12a der Rastschiene 12 linear oder progressiv zunehmen und entsprechend für jedes Rasten eine stärkere Kraft benötigen und somit eine höhere Energie in Bewegungsarbeit umwandeln. Besonders vorteilhaft ist bei der Ausbildung einer Rastschiene der Umstand, daß ein Rückfedern der Rastschiene 12 gegen die Vorspannung der Federn 13 ausgeschlossen ist, wodurch neben den Federn 13, die die Energie des Aufpralls in Spannenergie umwandeln, keine weiteren Haltemittel erforderlich sind, um ein Rückprallen der Fronthaube 1 zu unterbinden. Die Federkraft der Federn 13 läßt sich in einfacher Weise einstellen, so daß die Mindestkraft, die für das Rasten erforderlich ist, deutlich über der Gewichtskraft der Fronthaube 1 einstellbar ist, und zugleich bereits ein Rasten in Reaktion auf den Aufprall von kleinen Massen, wie sie bei Unfällen mit Kindern bei mittleren und niedrigen Geschwindigkeiten eintreten, erfolgt. Ein versehentliches Einrasten der Rastschiene 12 und damit Absenken der Fronthaube 1 läßt sich mit der Rastschiene 12 auch einfach wieder beheben, in dem beispielsweise mit einem entsprechenden Werkzeug eine entsprechende Gegenkraft zum Anheben der Fronthaube 1 aufgebracht wird. Es ist zu bemerken, daß die Rastschiene 12 ferner einen Endanschlag aufweisen kann, der ihre Verlagerung nach unten begrenzt, ebenso ist zweckmäßigerweise ein Endanschlag vorgesehen, der das Herausziehen der Rastschiene beim Wiederherstellen der Ausgangslage begrenzt.

Ein besonderer Vorteil der Spannvorrichtung mittels Rastschiene 12 besteht darin, daß dieselbe Rastschiene für verschiedene Fahrzeugtypen eingesetzt werden kann, deren Verlagerungsdistanz S unterschiedlich ist, indem die Rastschiene 12 entsprechend mehr oder weniger herausgezogen wird. Insgesamt wird zweckmäßigerweise ein Verlagerungsweg S in der Größenordnung von 100 mm besser 120 mm, und wenn möglich von wenigstens 70 mm gewährleistet.

Ein weiterer besonderer Vorteil der beschriebenen Rastschiene 12 besteht darin, daß auch bei nicht gleichförmiger Beanspruchung der beiden Scharniere 4 die Rastbewegung unempfindlich ist gegen eine beispielsweise quer zur Fahrtrichtung und quer zur Vertikalen wirkende horizontale Komponente, zum Beispiel durch Verkanten, da diese durch die Federn 13 mit aufgenommen wird. Insoweit kann auch ein solcher Aufprall gut aufgenommen werden, der deutlich exzentrisch ist und somit das eine Scharnier 4 stärker belastet als das andere.

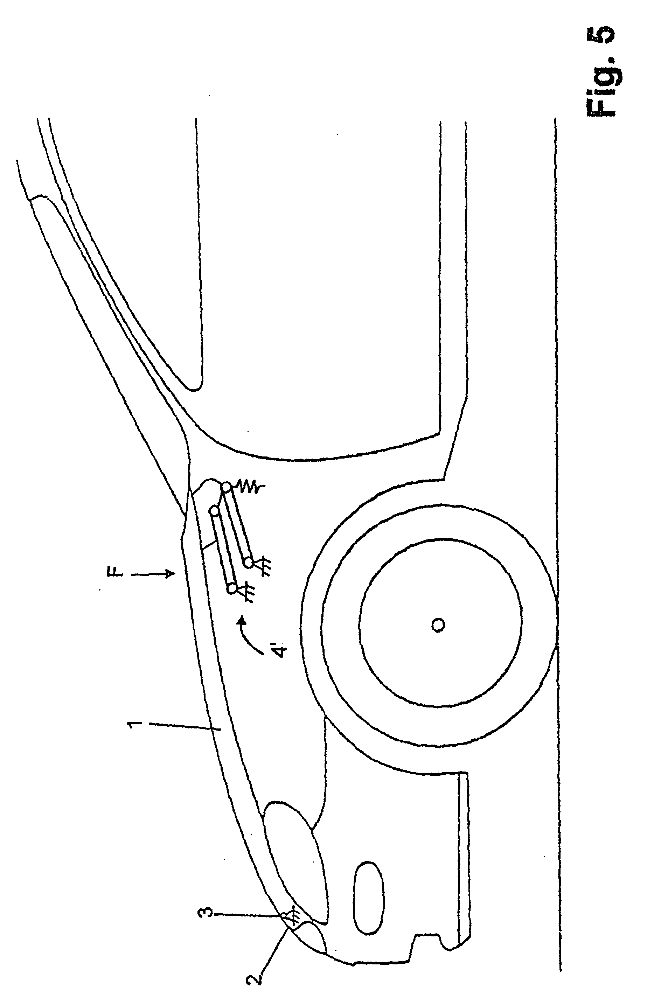

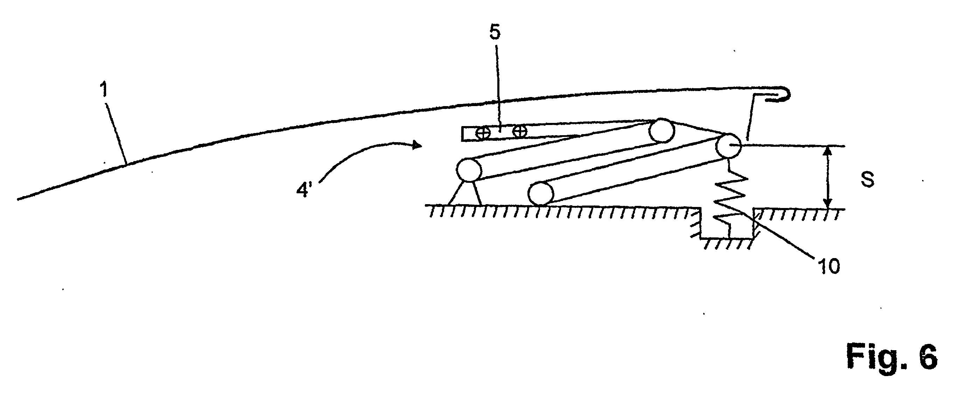

Das Ausführungsbeispiel gemäß der Fig. 5 und 6 unterscheidet sich von demjenigen der Fig. 1 und 2 im wesentlichen dadurch, daß anstelle eines Ein-Hebel-Gelenks, das am Rahmen axial verschieblich ist ein Viergelenk 7' vorgesehen ist, was hier lediglich schematisch angedeutet ist. Es versteht sich, daß hierbei die bei den vorhergehenden Ausführungsbeispielen an der Karosserie vorgesehenen Teile 10, 12, 13 bzw. 8, 9, 11 entsprechend an dem einen und/oder anderen Lenker des Viergelenk-Scharniers vorgesehen sein können, so daß z.B. die entsprechenden Lager an demselben Karosserieteil vorgesehen sind.

Die Erfindung ist vorstehend mit Spannmitteln beschrieben worden, die im wesentlichen in vertikaler Richtung die vertikale Komponente der Aufprallenergie vermitteln. Es versteht sich, daß neben vertikal angeordneten Spannelementen auch solche Spannelemente vorgesehen sein können, die lediglich eine vertikale Komponente und darüber hinaus eine horizontale Komponente aufweisen.

Bei der Beschreibung der Erfindung ist dabei ausgegangen worden, daß die Fronthaube 1 gegenüber einer Lage, in der ein Aufschlag auf unter der Fronthaube 1 liegende massive Teile möglich und damit gefährlich wäre, angehoben ist, und daß ein Teil der Aufprallenergie beim Absenken der Fronthaube 1 in Deformationsenergie bzw. Entspannenergie der Spannelemente 10 umgewandelt wird.

Die Erfindung ist vorstehend anhand verschiedener Ausführungsbeispiei beschreiben worden; es versteht sich, daß die Merkmale der verschiedenen Ausführungsbeispiele zum Schaffen weiterer vorteilhafter Ausführungen miteinander kombiniert werden können.

## Patentansprüche

1. Fronthaubenanordnung, bei der eine Fronthaube (1) eines Fahrzeugs über mindestens ein Scharnier (4) an den Rahmen des Fahrzeugs angelenkt ist, welche Fronthaube (1) ferner über wenigstens ein Haubenschloß (3) verschließbar ist, wobei das mindestens eine Scharnier nachgiebig ausgebildet ist und ein Spannmittel für einen überwindbaren vertikalen Widerstand entgegen einer die Fronthaube (1) um das Haubenschloß (3) verschwenkenden Kraft vorgesehen ist,
**dadurch gekennzeichnet,**
**daß** ein ein Gelenk (6) des mindestens einen Scharniers (4) mit dem Rahmen verbindender Lenker (7) verschieblich an der Karosserie angeordnet ist.

2. Fronthaubenanordnung nach Anspruch 1, **dadurch gekennzeichnet, daß** das Scharnier ein Eingelenkscharnier (4) ist.

3. Fronthaubenanordnung nach Anspruch 1, **dadurch gekennzeichnet, daß** das Scharnier ein Viergelenk-Schamier (4) ist.

4. Fronthaubenanordnung nach einem der Ansprüche 1 bis 3, **dadurch gekennzeichnet, daß** der Lenker (7) durch Federkraft (11) in einem Lager (8) vorgespannt ist.

5. Fronthaubenanordnung nach einem der Ansprüche 1 bis 4, **dadurch gekennzeichnet, daß** das Spannmittel eine komprimierbare Feder (10) umfaßt.

6. Fronthaubenanordnung nach einem der Ansprüche 1 bis 4, **dadurch gekennzeichnet, daß** das Spannmittel eine vertikal angeordnete Rastschiene (12) umfaßt, deren vertikale Verlagerung durch horizontal angeordnete Federelemente (13) gebremst ist.

7. Fronthaubenanordnung nach einem der Ansprüche 1 bis 6, **dadurch gekennzeichnet, daß** das Haubenschloß ein eigenes Spannmittel für einen überwindbaren vertikalen Widerstand entgegen einer auf die Fronthaube (1) einwirkenden Kraft aufweist.

8. Fronthaubenanordnung nach einem der Ansprüche 1 bis 7, **dadurch gekennzeichnet, daß** das Scharnier (4) im fahrbereiten Zustand nachgiebig ausgebildet ist.

## Claims

1. A front-hood arrangement, wherein a front hood (1) of a vehicle is coupled to the frame of the vehicle via at least one hinge (4), which front hood (1) can also be closed by means of at least one hood lock (3), the at least one hinge being of resilient design, and a stressing means for providing a vertical resistance, which can be overcome, to a force pivoting the front hood (1) about the hood lock (3) being provided,
**characterized in**
**that** the link (7) which connects a joint (6) of the hinge (4) to the frame is arranged displaceably.

2. The front-hood arrangement as claimed in claim 1, **characterized in that** the hinge is a single-joint hinge (4).

3. The front-hood arrangement as claimed in claim 1, **characterized in that** the hinge is a four-joint hinge (4).

4. The front-hood arrangement as claimed in one of claims 1 to 3, **characterized in that** the link (7) is prestressed by spring force (11) in a bearing (8).

5. The front-hood arrangement as claimed in one of claims 1 to 4, **characterized in that** the stressing means comprises a compressible spring (10).

6. The front-hood arrangement as claimed in one of claims 1 to 4, **characterized in that** the stressing means comprises a vertically arranged latch bar (12), the vertical displacement of which is decelerated by horizontally arranged spring elements (13).

7. The front-hood arrangement as claimed in one of claims 1 to 6, **characterized in that** the hood lock has a dedicated stressing means for providing a vertical resistance, which can be overcome, to a force acting on the front hood (1).

8. The front-hood arrangement as claimed in one of claims 1 to 7, **characterized in that** the hinge (4), in the ready-to-drive position, is of resilient design.

## Revendications

1. Ensemble de capot avant dans lequel un capot avant (1) d'un véhicule est articulé sur le châssis du véhicule au moyen d'au moins une charnière (4), lequel capot avant (1) peut en outre être verrouillé au moyen d'au moins une serrure de capot (3), l'au moins une charnière étant conformée pour être élastique et un moyen de tension est prévu pour exercer une résistance verticale surmontable s'opposant à une force de basculement du capot avant autour de la serrure de capot,
**caractérisé en ce**
**qu'**un bras reliant une articulation (6) de l'au moins une charnière (4) au châssis est agencé de façon mobile sur la carrosserie.

2. Ensemble de capot avant selon la revendication 1, **caractérisé en ce que** la charnière est une charnière simple (4).

3. Ensemble de capot avant selon la revendication 1, **caractérisé en ce que** la charnière est une charnière à quadruple articulations (4).

4. Ensemble de capot avant selon l'une des revendications 1 à 3, **caractérisé en ce que** le bras (7) est préalablement tendu par une force de ressort (11) dans un palier (8).

5. Ensemble de capot avant selon l'une des revendications 1 à 4, **caractérisé en ce que** le moyen de tension comporte un ressort à compression (10).

6. Ensemble de capot avant selon l'une des revendications 1 à 4, **caractérisé en ce que** le moyen de tension comporte une glissière à cliquets agencée verticalement (12) dont le déplacement vertical est freiné par des éléments à ressort (13) agencés horizontalement.

7. Ensemble de capot avant selon l'une des revendications 1 à 6, **caractérisé en ce que** la serrure de capot comporte un moyen de tension propre destiné à exercer une résistance verticale surmontable s'opposant à une force agissant sur le capot avant (1).

8. Ensemble de capot avant selon l'une des revendications 1 à 7, **caractérisé en ce que** la charnière (4) est conformée de façon à être élastique dans l'état prêt à rouler.
